# EUROPEAN PATENT APPLICATION

(11) **EP 3 961 256 A1**
(43) Date of publication of application: **02.03.2022**
(21) Application number: 20900681.6
(22) Date of filing: 16.10.2020
(51) Int. Cl.: G01S 13/89, G01S 17/89, G01S 7/40

(54) **DATASET ESTABLISHMENT METHOD, VEHICLE, AND STORAGE MEDIUM**

(30) Priority: 30.06.2020 CN 202010618892
(71) Applicant: Guangdong Xiaopeng Motors Technology Co., Ltd., Sino-Singapore Knowledge City, Huangpu District Guangzhou, Guangdong 510555 (CN)
(72) Inventor: WANG, Pengluo, Guangzhou, Guangdong 510555 (CN); DONG, Xu, Guangzhou, Guangdong 510555 (CN); LIU, Langechuan, Guangzhou, Guangdong 510555 (CN)
(74) Representative: Isarpatent
(86) International application number: PCT/CN2020/121496
(87) International publication number: WO 2022/000857

(57) **Abstract**

The present disclosure relates to the technical field of autopilot, and particularly relates to a method for establishing a dataset and a vehicle. The method includes acquiring a millimeter-wave-radar image and a lidar image; performing spatial calibration and time calibration to the millimeter-wave radar and the lidar; constructing a deep neural network for inferring a lidar image, and generating a target inference result of the lidar by using the deep neural network; projecting the target inference result to a matched millimeter-wave-radar image as a pseudo-marker of the millimeter-wave-radar image; according to a local signal of the millimeter-wave radar in an area where the pseudo-marker is located, generating a radar target confidence; and according to the radar target confidence and the pseudo-marker, establishing a millimeter-wave-radar dataset. As compared with the traditional human labeling, the present disclosure, by using the lidar, can realize automatic marking, and increase the marking efficiency; and, based on the deep neural network integrated in the model, the present disclosure can realize the target identification of a high recall rate, filter out the target detecting block of false positive, and improve the marking quality.

## Description

### TECHNICAL FIELD

The present disclosure relates to the technical field of autopilot, and particularly relates to a method for establishing a dataset, a vehicle and a storage medium.

### BACKGROUND

Millimeter-wave radars have become an indispensable part of Advanced Driver Assistance Systems (for short, ADAS) of vehicles. When a vehicle is travelling in a severe environment such as rainstorm and snowstorm or travelling in a severe lighting condition such as strong light and dark light, the millimeter-wave radar can operate normally, and thus has a strong robustness. The operation of traditional millimeter-wave radars comprises extracting the information on the position and the speed of the target by using a digital-signal-processing algorithm, and establishing a dataset according to a series of generated radar points or point clouds. However, the generated radar points or point clouds do not have the information on the dimensions, the pose and so on of the target. In autopilot, it is usually required to use the position and pose information of the target, including the position, the depth, the dimensions and the angles, to complete the operation of environmental perception. However, because the millimeter-wave-radar datasets applied to autopilot are usually obtained by human labeling, the marking efficiency is extremely low.

Although other sensors, such as a camera, may also be used to mark the millimeter-wave radars, the accuracy of the estimation of the position and pose information by cameras is low.

### SUMMARY

In view of the above problems, the embodiments of the present disclosure are provided to provide a method for establishing a dataset, a vehicle and a storage medium that overcome the above problems or at least partially solve the above problems.

In order to solve the above problems, an embodiment of the present disclosure discloses a method for establishing a dataset, applied to a vehicle provided with a millimeter-wave radar and a lidar, wherein the method comprises:
acquiring a millimeter-wave-radar image;
acquiring a lidar image;
performing spatial calibration to the millimeter-wave radar and the lidar, to acquire a target-calibrated-pose information;
matching the millimeter-wave-radar image and the lidar image with respect to a timestamp, to complete time calibration between the millimeter-wave radar and the lidar;
constructing a deep neural network for inferring a lidar image, and generating a target inference result of the lidar by using the deep neural network;
according to the target-calibrated-pose information, projecting the target inference result to a matched millimeter-wave-radar image as a pseudo-marker of the millimeter-wave-radar image;
according to a local signal of the millimeter-wave radar in an area where the pseudo-marker is located, generating a radar target confidence; and
according to the radar target confidence and the pseudo-marker, establishing a millimeter-wave-radar dataset.

In a particular embodiment, the step of acquiring the millimeter-wave-radar image comprises:
collecting a millimeter-wave-radar signal, and performing digital signal processing, to obtain an initial image of the millimeter-wave radar; and
performing coordinate-system transformation to the initial image of the millimeter-wave radar, to obtain the millimeter-wave-radar image in a Cartesian coordinate system and a timestamp corresponding to the millimeter-wave-radar image.

In a particular embodiment, the step of acquiring the lidar image comprises:
collecting a lidar signal, and performing digital signal processing to the lidar signal, to obtain an initial image of the lidar;
when a travelling speed of the vehicle exceeds a preset threshold speed, performing frame reconstruction to the initial image of the lidar; and
according to an initial-calibrated-pose information in installation of the lidar, transforming the lidar image obtained after the frame reconstruction to be in a Cartesian coordinate system, and acquiring a timestamp corresponding to the lidar image.

In a particular embodiment, the step of performing the frame reconstruction to the initial image of the lidar comprises:
according to a coverage area of a visual angle of the millimeter-wave radar on the initial image of the lidar, calculating a target initial scanning angle;
acquiring an image *f*₀ of a current moment *t*₀ and an image *f*₁ of a next moment *t*₁; and
calculating moments *t*₀' and *t*₁' when the lidar scans the target initial scanning angle, and combining scanned images of the image *f*₀ in a duration from *t*₀' to *t*₁ and the image *f*₁ in a duration from *t*₁ to *t*₁', to restructure a scanned image in a duration from *t*₀' to *t*₁' as the lidar image obtained after the frame reconstruction.

In a particular embodiment, the step of performing the spatial calibration to the millimeter-wave radar and the lidar, to acquire the target-calibrated-pose information comprises:
according to a predetermined calibration target, matching a millimeter-wave-radar signal and a lidar signal of the calibration target; and
calculating a spatial-transformation matrix, to obtain the target-calibrated-pose information.

In a particular embodiment, the step of matching the millimeter-wave-radar image and the lidar image with respect to the timestamp, to complete the time calibration between the millimeter-wave radar and the lidar comprises:
according to predetermined segments of the millimeter-wave-radar signal and the lidar signal, calculating a time deviation between the millimeter-wave radar and the lidar to complete the time calibration, and generating a timestamp obtained after the calibration.

In a particular embodiment, the step of constructing the deep neural network for inferring the lidar image, and generating the target inference result of the lidar by using the deep neural network comprises:
by using a model integrating approach, constructing the deep neural network for inferring the lidar image, and generating the target inference result of the lidar by using the deep neural network.

In a particular embodiment, the step of, according to the local signal of the millimeter-wave radar in the area where the pseudo-marker is located, generating the radar target confidence comprises:
expanding a target detecting block corresponding to the local signal of the millimeter-wave radar in the area where the pseudo-marker is located to a preset scale, then calculating a frequency histogram of a signal intensity of the millimeter-wave-radar signal within the expanded target detecting block, and drawing a corresponding cumulative distribution function according to the frequency histogram;
then continuing to perform normalization processing to the cumulative distribution function, and calculating an area under curve; and
according to a magnitude of a numerical value of the area under curve, generating the radar target confidence.

An embodiment of the present disclosure further discloses a vehicle, wherein the vehicle comprises:
a first image acquiring module configured for acquiring a millimeter-wave-radar image;
a second image acquiring module configured for acquiring a lidar image;
a spatial-calibration module configured for performing spatial calibration to the millimeter-wave radar and the lidar, to acquire a target-calibrated-pose information;
a time-calibration module configured for matching the millimeter-wave-radar image and the lidar image with respect to a timestamp, to complete time calibration between the millimeter-wave radar and the lidar;
a target inferring module configured for constructing a deep neural network for inferring a lidar image, and generating a target inference result of the lidar by using the deep neural network;
a pseudo-marker module configured for, according to the target-calibrated-pose information, projecting the target inference result to a matched millimeter-wave-radar image as a pseudo-marker of the millimeter-wave-radar image;
a confidence generating module configured for, according to a local signal of the millimeter-wave radar in an area where the pseudo-marker is located, generating a radar target confidence; and
a dataset establishing module configured for, according to the radar target confidence and the pseudo-marker, establishing a millimeter-wave-radar dataset.

An embodiment of the present disclosure further discloses a vehicle, wherein the vehicle comprises: a processor, a memory and a computer program that is stored in the memory and is executable on the processor, and the computer program, when executed by the processor, implements the steps of the method for establishing a dataset stated above.

An embodiment of the present disclosure further discloses a computer-readable storage medium, wherein the computer-readable storage medium stores a computer program, and the computer program, when executed by a processor, implements the steps of the method for establishing a dataset stated above.

The embodiments of the present disclosure have the following advantages:

As compared with the traditional human labeling, the present disclosure, by using the lidar, can realize automatic marking, and increase the marking efficiency; the present disclosure eliminates the rolling shutter of the lidar signal in a high-speed environment by means of the frame-reconstruction algorithm of the lidar in a simple manner; and, based on the deep neural network integrated in the model, the present disclosure can realize the target identification of a high recall rate, filter out the target detecting block of false positive, and improve the marking quality.

### BRIEF DESCRIPTION OF THE DRAWINGS

Fig. 1 is a flow chart of the steps of an embodiment of the method for establishing a dataset according to the present disclosure;
Fig. 2 is a structural block diagram of an embodiment of the vehicle according to the present disclosure; and
Fig. 3 is a comparison diagram of the effects of the frame reconstruction to the lidar image according to the present disclosure.

### DETAILED DESCRIPTION

In order to make the above purposes, features and advantages of the present disclosure more apparent and understandable, the present disclosure will be described in further detail below with reference to the drawings and the particular embodiments.

One of the core concepts of the embodiments of the present disclosure is that the establishing of a millimeter-wave-radar dataset is realized by using a lidar.

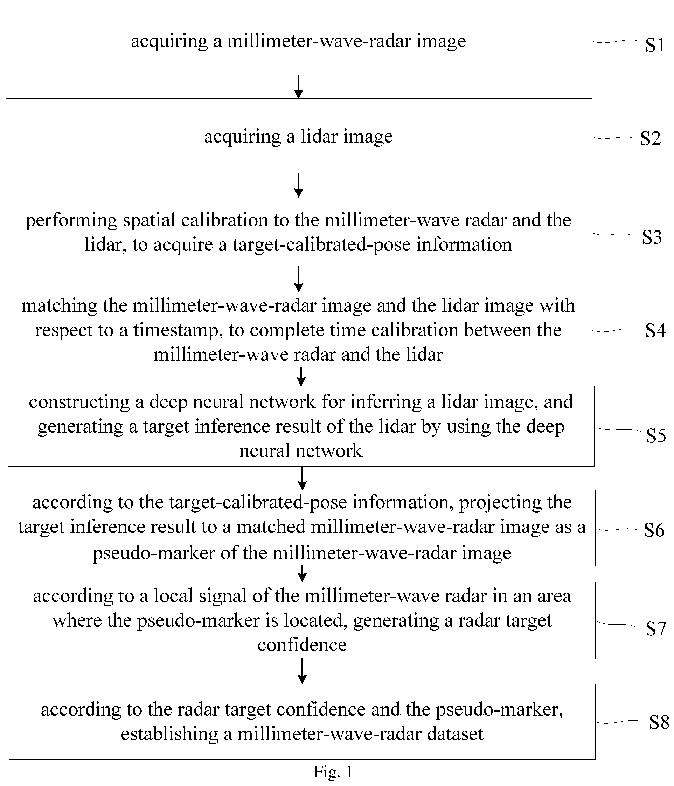

Referring to Fig. 1, Fig. 1 shows a flow chart of the steps of an embodiment of the method for establishing a dataset according to the present disclosure, which may particularly comprise the following steps:
S1: acquiring a millimeter-wave-radar image;
S2: acquiring a lidar image;
S3: performing spatial calibration to the millimeter-wave radar and the lidar, to acquire a target-calibrated-pose information;
S4: matching the millimeter-wave-radar image and the lidar image with respect to a timestamp, to complete time calibration between the millimeter-wave radar and the lidar;
S5: constructing a deep neural network for inferring a lidar image, and generating a target inference result of the lidar by using the deep neural network;
S6: according to the target-calibrated-pose information, projecting the target inference result to a matched millimeter-wave-radar image as a pseudo-marker of the millimeter-wave-radar image;
S7: according to a local signal of the millimeter-wave radar in an area where the pseudo-marker is located, generating a radar target confidence; and
S8: according to the radar target confidence and the pseudo-marker, establishing a millimeter-wave-radar dataset.

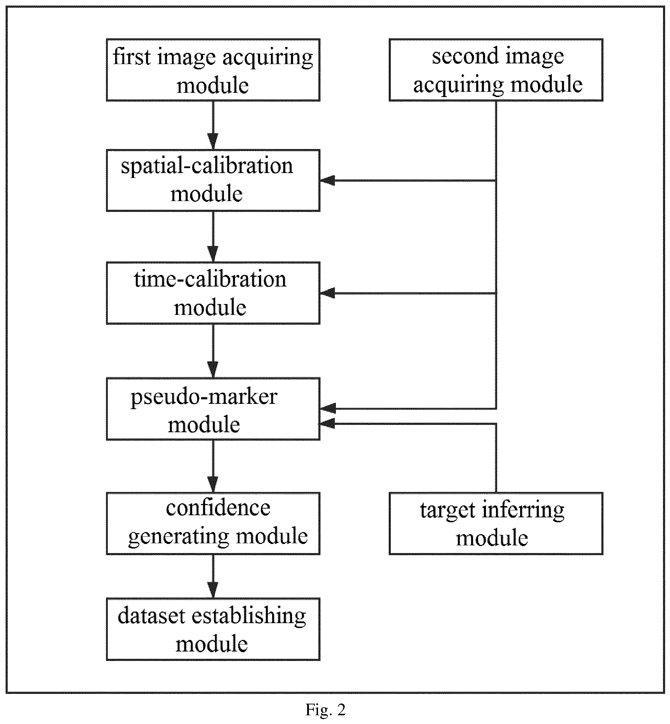

Referring to Fig. 2, the present disclosure further provides a vehicle, and the above method for establishing a dataset may be implemented by the vehicle as the action executing subject.

Particularly, the vehicle comprises:
a first image acquiring module configured for acquiring a millimeter-wave-radar image;
a second image acquiring module configured for acquiring a lidar image;
a spatial-calibration module configured for performing spatial calibration to the millimeter-wave radar and the lidar, to acquire a target-calibrated-pose information;
a time-calibration module configured for matching the millimeter-wave-radar image and the lidar image with respect to a timestamp, to complete time calibration between the millimeter-wave radar and the lidar;
a target inferring module configured for constructing a deep neural network for inferring a lidar image, and generating a target inference result of the lidar by using the deep neural network;
a pseudo-marker module configured for, according to the target-calibrated-pose information, projecting the target inference result to a matched millimeter-wave-radar image as a pseudo-marker of the millimeter-wave-radar image;
a confidence generating module configured for, according to a local signal of the millimeter-wave radar in an area where the pseudo-marker is located, generating a radar target confidence; and
a dataset establishing module configured for, according to the radar target confidence and the pseudo-marker, establishing a millimeter-wave-radar dataset.

The steps of S1 to S8 may also be implemented by the modules of the vehicle. Particularly, S1 may be implemented by the first image acquiring module; S2 may be implemented by the second image acquiring module; S3 may be implemented by the spatial-calibration module; S4 may be implemented by the time-calibration module; S5 may be implemented by the target inferring module; S6 may be implemented by the pseudo-marker module; S7 may be implemented by the confidence generating module; and S8 may be implemented by the dataset establishing module.

After the millimeter-wave radar and the lidar have been completely installed on the vehicle, the positions of the two sensors, the millimeter-wave radar and the lidar, may be measured, to obtain their respective rough calibrated-pose information as the initial-calibrated-pose information.

In the step S1, the step of acquiring the millimeter-wave-radar image by the first image acquiring module comprises:
S11: collecting a millimeter-wave-radar signal, and performing digital signal processing, to obtain an initial image of the millimeter-wave radar; and
S12: performing coordinate-system transformation to the initial image of the millimeter-wave radar, to obtain the millimeter-wave-radar image in a Cartesian coordinate system and a timestamp corresponding to the millimeter-wave-radar image.

Correspondingly, the first image acquiring module comprises:
a first collecting and processing unit configured for collecting a millimeter-wave-radar signal, and performing digital signal processing, to obtain an initial image of the millimeter-wave radar; and
a first coordinate-system transformation unit configured for performing coordinate-system transformation to the initial image of the millimeter-wave radar, to obtain the millimeter-wave-radar image in a Cartesian coordinate system and a timestamp corresponding to the millimeter-wave-radar image.

S11 and S12 may be implemented by the first image acquiring module, and may also be implemented by the units in the module. Particularly, S11 is implemented by the collecting and processing unit, and S12 is implemented by the coordinate-system transformation unit.

In S11, the first collecting and processing unit firstly collects the radar signals in the scenes of real city and expressway, and performs digital signal processing, to obtain the initial image of the millimeter-wave radar. The digital signal processing may have multiple implementations, for example Fast Fourier Transform (FFT), and may also employ a super-resolution algorithm such as a Multiple Signal Classification (MUSIC) algorithm, to generate the initial image of the millimeter-wave radar of a super-resolution.

In S12, the first coordinate-system transformation unit performs coordinate-system transformation to the initial image of the millimeter-wave radar. Because the millimeter-wave-radar image obtained after the digital signal processing is in a polar coordinate system, in order to realize the subsequent spatial calibration and marked-information fusion, it is required to transform the initial image of the millimeter-wave radar in the polar coordinate system to be in a Cartesian coordinate system, to obtain the millimeter-wave-radar image in a Cartesian coordinate system and a timestamp corresponding to the millimeter-wave-radar image.

In the step S2, the step of acquiring the lidar image by the second image acquiring module comprises:
S21: collecting a lidar signal, and performing digital signal processing to the lidar signal, to obtain an initial image of the lidar;
S22: when a travelling speed of the vehicle exceeds a preset threshold speed, performing frame reconstruction to the initial image of the lidar; and
S23: according to an initial-calibrated-pose information in installation of the lidar, transforming the lidar image obtained after the frame reconstruction to be in a Cartesian coordinate system, and acquiring a timestamp corresponding to the lidar image.

Correspondingly, the second image acquiring module comprises:
a second collecting and processing unit configured for collecting a lidar signal, and performing digital signal processing to the lidar signal, to obtain an initial image of the lidar;
a frame-reconstruction unit configured for, when a travelling speed of the vehicle exceeds a preset threshold speed, performing frame reconstruction to the initial image of the lidar; and
a second coordinate-system transformation unit configured for, according to an initial-calibrated-pose information in installation of the lidar, transforming the lidar image obtained after the frame reconstruction to be in a Cartesian coordinate system, and acquiring a timestamp corresponding to the lidar image.

S21 to S23 may be implemented by the second image acquiring module, and may also be implemented by the units in the module. Particularly, S21 may be implemented by the second collecting and processing unit, S22 may be implemented by the frame-reconstruction unit, and S23 may be implemented by the second coordinate-system transformation unit.

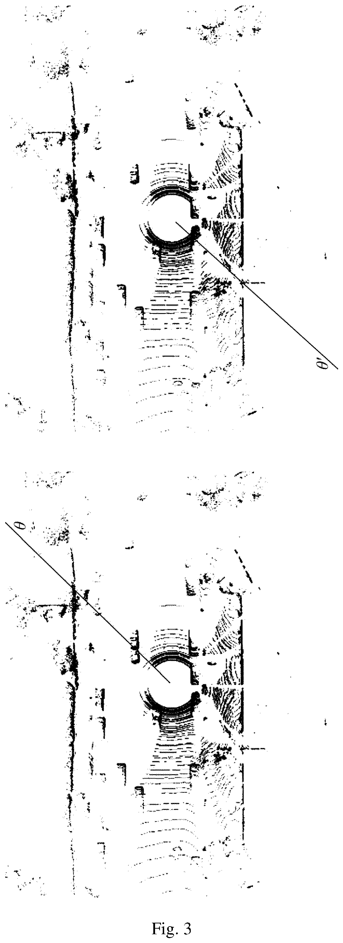

The operation modes of the millimeter-wave radar and the lidar are different. The lidar signal has rolling shutter, which results in deformation of a specific target, while the millimeter-wave-radar signal does not have such a problem. Therefore, it is required to process the lidar signal. In case of a low speed, the rolling shutter of the lidar is not obvious, and frame reconstruction may not be performed. Referring to Fig. 3, Fig. 3 shows a comparison between the effects before and after the frame reconstruction according to the present disclosure. The line segments extending from the center outwardly in the figures are the initial scanning angles of the lidar in the current frame, and are expressed as *θ* and *θ*', wherein *θ* represents the initial scanning angle of the lidar in the current frame before the frame reconstruction has not been performed, and *θ*' represents the initial scanning angle of the lidar in the current frame when the frame reconstruction is about to be performed. It can be seen that, adjacent to the initial scanning angle in the left figure, the target vehicle that passes has a ghosting, whereby the position and the shape of the target vehicle have distortion. However, after the frame reconstruction, the target shape is corrected in the right figure. Such a distortion results in erroneous inference results of the neural network, such as the information on the object type, the position and the dimensions, and in turn, in the marked-information fusion, results in inaccuracy of the pseudo-marker of the millimeter-wave radar and inaccuracy of the calculation of the target confidence. The cause of the problem is the rolling shutter of the lidar. Traditional solutions employ speed compensation approaches to correct the target. However, they have a high complexity, and require to know the relative speed of the target vehicle, so they have difficulty in implementation. The present disclosure provides the frame-reconstruction algorithm, and, by restructuring the initial scanning angles of the lidar (shown by the line segments in the figures), eliminates the rolling shutter in an manner of a low complexity.

Particularly, in the step S22, the frame-reconstruction unit, when determining that the travelling speed of the vehicle exceeds a preset speed threshold, i.e., affirms that the vehicle is in high-speed travelling, and then the step of performing the frame reconstruction to the initial image of the lidar comprises:
according to a coverage area of a visual angle of the millimeter-wave radar on the initial image of the lidar, calculating a target initial scanning angle *θ*', wherein the target initial scanning angle *θ*' is merely required to be external to the coverage area of the visual angle of the radar; and
based on the continuity of scanning of the lidar, acquiring an image *f*₀ of a current moment *t*₀ and an image *f*₁ of a next moment *t*₁; and calculating moments *t*₀' and *t*₁' when the lidar scans the target initial scanning angle *θ*', and combining scanned images of the image *f*₀ in a duration from *t*₀' to *t*₁ and the image *f*₁ in a duration from *t*₁ to *t*₁', to restructure a scanned image in a duration from *t*₀' to *t*₁' as the lidar image obtained after the frame reconstruction.

After the frame reconstruction, according to an initial-calibrated-pose information in installation of the lidar, the lidar image obtained after the frame reconstruction is transformed to be in the same Cartesian coordinate system as that of the millimeter-wave radar, and acquiring a timestamp corresponding to the lidar image.

Particularly, in the step S3, the spatial-calibration module, according to a predetermined calibration target, matches a millimeter-wave-radar signal and a lidar signal of the calibration target; and calculates a spatial-transformation matrix, to obtain the target-calibrated-pose information. For example, by using a trihedral radar reflector as the calibration target, the millimeter-wave-radar signal and the lidar signal of the reflector are matched, and then a spatial-transformation matrix is calculated to obtain the accurate calibrated-pose information as the target-calibrated-pose information.

Particularly, in the step S4, the time-calibration module, according to predetermined segments of the millimeter-wave-radar signal and the lidar signal, calculates a time deviation between the millimeter-wave radar and the lidar to complete the time calibration, and generates a timestamp obtained after the calibration. The predetermined segments may be segments where a high-speed target passes. According to the matching on the image between the millimeter-wave-radar response and the lidar response of the high-speed target, the time deviation between the two sensors are in turn calculated out to complete the time calibration.

After the spatial calibration of S3 and the time calibration of S4, the high-speed targets in the millimeter-wave-radar image and the lidar image that are close and match with respect to the timestamp can completely overlap, and the image obtained after the overlapping is used for marking and quality assessment.

In the step S5, the step of, by using the model integrating approach, constructing the deep neural network for inferring the lidar image, to generate the target inference result of the lidar, particularly comprises:
S51: performing test time augmentation to the inputted lidar image. Particularly, there are many embodiments of that. In the present disclosure, the lidar image undergoes operations of horizontal and vertical turnings and rotations, to generate totally eight groups of data to be inferred, and the angle difference between each two groups of the data is 90°. Certainly, the rotation may also be performed by other angles, or the point clouds of the lidar may undergo random drop-out, and so on.
S52: inputting the lidar image obtained after the data augmentation into two or more different neural network models for the inference, and performing the above process to a group of original images, to obtain multiple groups of inference results from different angles and models. The present disclosure employs two different state-of-the-art models Complex-YOLO and PointRCNN, and therefore one group of original images can obtain sixteen groups of inference results.
S53: screening the sixteen groups of inference results, and if the quantity of the inference results of the target at the same one position is less than a specific threshold, determining that to be false positive and filtering out. In the present solution, in order to ensure the recall rate, the threshold is set to be 2.
S54: integrating the multiple groups of inference results, to obtain the target inference result based on the lidar, including the target score, type, position, dimensions and angles. There are many approaches for the integration. The present disclosure employs an algorithm based on non-maximal inhibition. Other integrating approaches may also be used according to demands, which is not limited here.

In the step S6, according to the target-calibrated-pose information obtained in S4, i.e., the accurate calibrated-pose information, the inference result of the lidar is projected to a matched millimeter-wave-radar image as a pseudo-marker of the millimeter-wave-radar image.

Particularly, S7 comprises:
expanding a target detecting block corresponding to the local signal of the millimeter-wave radar in the area where the pseudo-marker is located to a preset scale, then calculating a frequency histogram of a signal intensity of the millimeter-wave-radar signal within the expanded target detecting block, and drawing a corresponding cumulative distribution function according to the frequency histogram; then continuing to perform normalization processing to the cumulative distribution function, and calculating an area under curve; and according to a magnitude of a numerical value of the area under curve, generating the radar target confidence. The radar target confidence is used as an important parameter for the marking of the millimeter-wave radar, and in the training of the dataset by using the neural network, the radar targets of a low confidence are removed, to prevent the neural network from overfitting to the background noise of the millimeter-wave-radar signal.

In an embodiment of the present disclosure, it is required to, based on the local signal of the millimeter-wave radar in the area where the pseudo-marker is located, calculate the response intensity, determine whether an effective millimeter-wave-radar signal exists, and generate the radar target confidence. For example, the process may comprise setting the preset scale to be 120%, and then expanding the target detecting block corresponding to the local signal of the millimeter-wave radar in the area where the pseudo-marker is located to 120%, so as to sufficiently cover the radar signal generated at the surface of the target object; then calculating a frequency histogram of the signal intensity of the millimeter-wave-radar signal within the expanded target detecting block; and then drawing a corresponding cumulative distribution function according to the frequency histogram, finally performing normalization processing to the cumulative distribution function, and calculating the area under curve.

The magnitude of the numerical value of the area under curve can reflect the intensity of the millimeter-wave-radar signal of the object corresponding to the target detecting block. If the numerical value is higher, that indicates that the millimeter-wave-radar signal generated by the corresponding object is more intensive, and the probability that the target detecting block is ture positive is higher. If the numerical value is lower, the probability that it is false positive is higher. In the present disclosure, the target detecting block of false positive may be filtered out by setting the threshold of the area under curve to be 0.1.

In S8, according to the radar target confidence and the pseudo-marker, a millimeter-wave-radar dataset is established. Because of the demands by the vehicle usage scenes or the design architecture of the deep neural network, millimeter-wave-radar images in multiple forms may be required, for example, an FFT image, or an image obtained after processing by using a super-resolution algorithm, or an image in a polar coordinate system or a Cartesian coordinate system. In the establishing of the final dataset, the suitable image form is selected according to the target confidence, and the pseudo-marker undergoes corresponding transform processing, to generate a pseudo-marker dataset as the millimeter-wave-radar dataset.

It can be known from the above that, as compared with the traditional human labeling, the present disclosure, by using the lidar, can realize automatic marking, and increase the marking efficiency; the present disclosure eliminates the rolling shutter of the lidar signal in a high-speed environment by means of the frame-reconstruction algorithm of the lidar in a simple manner; and, based on the deep neural network integrated in the model, the present disclosure can realize the target identification of a high recall rate, filter out the target detecting block of false positive, and improve the marking quality.

It should be noted that, regarding the process embodiments, for brevity of the description, all of them are expressed as the combination of a series of actions, but a person skilled in the art should know that the embodiments of the present disclosure are not limited by the sequences of the actions that are described, because, according to the embodiments of the present disclosure, some of the steps may have other sequences or be performed simultaneously. Secondly, a person skilled in the art should also know that all of the embodiments described in the description are preferable embodiments, and not all of the actions that they involve are required by the embodiments of the present disclosure.

An embodiment of the present disclosure further provides a vehicle, wherein the vehicle comprises: a processor, a memory and a computer program that is stored in the memory and is executable on the processor, and the computer program, when executed by the processor, implements the steps of the embodiments of the method for establishing a dataset stated above, to obtain the same technical effect, which, in order to avoid replication, is not discussed here further.

An embodiment of the present disclosure further provides a computer-readable storage medium, wherein the computer-readable storage medium stores a computer program, and the computer program, when executed by a processor, implements the steps of the embodiments of the method for establishing a dataset stated above, to obtain the same technical effect, which, in order to avoid replication, is not discussed here further.

The embodiments of the description are described in the mode of progression, each of the embodiments emphatically describes the differences from the other embodiments, and the same or similar parts of the embodiments may refer to each other.

A person skilled in the art should understand that the embodiments of the present disclosure may be provided as a method, a device, or a computer program product. Therefore, the embodiments of the present disclosure may take the form of a complete hardware embodiment, a complete software embodiment, or an embodiment combining software and hardware. Furthermore, the embodiments of the present disclosure may take the form of a computer program product implemented on one or more computer-usable storage media (including but not limited to a disk storage, a CD-ROM, an optical memory and so on) containing a computer-usable program code therein.

The embodiments of the present disclosure are described with reference to the flow charts and/or block diagrams of the method, the terminal device (system), and the computer program product according to the embodiments of the present disclosure. It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable data processing terminal device to generate a machine, so that a device for implementing the functions specified in one or more flows of the flow charts and/or one or more blocks of the block diagrams can be generated by instructions executed by the processor of the computers or the other programmable data processing terminal device.

The computer program instructions may also be stored in a computer-readable memory that can instruct the computers or the other programmable data processing terminal device to operate in a specific mode, so that the instructions stored in the computer-readable memory generate an article comprising an instruction device, and the instruction device implements the functions specified in one or more flows of the flow charts and/or one or more blocks of the block diagrams.

The computer program instructions may also be loaded to the computers or the other programmable data processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

Although preferable embodiments of the embodiments of the present disclosure have been described, once a person skilled in the art has known the essential inventive concept, he may make further variations and modifications on those embodiments. Therefore, the appended claims are intended to be interpreted as including the preferable embodiments and all of the variations and modifications that fall within the scope of the embodiments of the present disclosure.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

The method for establishing a dataset, the vehicle and the storage medium according to the present disclosure have been described in detail above. The principle and the embodiments of the present disclosure are described herein with reference to the particular examples, and the description of the above embodiments is merely intended to facilitate to understand the method according to the present disclosure and its core concept. Moreover, for a person skilled in the art, according to the concept of the present disclosure, the particular embodiments and the range of application may be varied. In conclusion, the contents of the description should not be understood as limiting the present disclosure.

## Claims

1. A method for establishing a dataset, applied to a vehicle provided with a millimeter-wave radar and a lidar, **characterised in that** the method comprises:
acquiring a millimeter-wave-radar image;
acquiring a lidar image;
performing spatial calibration to the millimeter-wave radar and the lidar, to acquire a target-calibrated-pose information;
matching the millimeter-wave-radar image and the lidar image with respect to a timestamp, to complete time calibration between the millimeter-wave radar and the lidar;
constructing a deep neural network for inferring a lidar image, and generating a target inference result of the lidar by using the deep neural network;
according to the target-calibrated-pose information, projecting the target inference result to a matched millimeter-wave-radar image as a pseudo-marker of the millimeter-wave-radar image;
according to a local signal of the millimeter-wave radar in an area where the pseudo-marker is located, generating a radar target confidence; and
according to the radar target confidence and the pseudo-marker, establishing a millimeter-wave-radar dataset.

2. The method according to claim 1, wherein the step of acquiring the millimeter-wave-radar image comprises:
collecting a millimeter-wave-radar signal, and performing digital signal processing, to obtain an initial image of the millimeter-wave radar; and
performing coordinate-system transformation to the initial image of the millimeter-wave radar, to obtain the millimeter-wave-radar image in a Cartesian coordinate system and a timestamp corresponding to the millimeter-wave-radar image.

3. The method according to claim 2, wherein the step of acquiring the lidar image comprises:
collecting a lidar signal, and performing digital signal processing to the lidar signal, to obtain an initial image of the lidar;
when a travelling speed of the vehicle exceeds a preset threshold speed, performing frame reconstruction to the initial image of the lidar; and
according to an initial-calibrated-pose information in installation of the lidar, transforming the lidar image obtained after the frame reconstruction to be in a Cartesian coordinate system, and acquiring a timestamp corresponding to the lidar image.

4. The method according to claim 3, wherein the step of performing the frame reconstruction to the initial image of the lidar comprises:
according to a coverage area of a visual angle of the millimeter-wave radar on the initial image of the lidar, calculating a target initial scanning angle;
acquiring an image *f*₀ of a current moment *t*₀ and an image *f*₁ of a next moment *t*₁; and
calculating moments *t*₀' and *t*₁' when the lidar scans the target initial scanning angle, and combining scanned images of the image *f*₀ in a duration from *t*₀' to *t*₁ and the image *f*₁ in a duration from *t*₁ to *t*₁', to restructure a scanned image in a duration from *t*₀' to *t*₁' as the lidar image obtained after the frame reconstruction.

5. The method according to claim 1, wherein the step of performing the spatial calibration to the millimeter-wave radar and the lidar, to acquire the target-calibrated-pose information comprises:
according to a predetermined calibration target, matching a millimeter-wave-radar signal and a lidar signal of the calibration target; and
calculating a spatial-transformation matrix, to obtain the target-calibrated-pose information.

6. The method according to claim 5, wherein the step of matching the millimeter-wave-radar image and the lidar image with respect to the timestamp, to complete the time calibration between the millimeter-wave radar and the lidar comprises:
according to predetermined segments of the millimeter-wave-radar signal and the lidar signal, calculating a time deviation between the millimeter-wave radar and the lidar to complete the time calibration, and generating a timestamp obtained after the calibration.

7. The method according to claim 1, wherein the step of constructing the deep neural network for inferring the lidar image, and generating the target inference result of the lidar by using the deep neural network comprises:
by using a model integrating approach, constructing the deep neural network for inferring the lidar image, and generating the target inference result of the lidar by using the deep neural network.

8. The method according to claim 1, wherein the step of, according to the local signal of the millimeter-wave radar in the area where the pseudo-marker is located, generating the radar target confidence comprises:
expanding a target detecting block corresponding to the local signal of the millimeter-wave radar in the area where the pseudo-marker is located to a preset scale, then calculating a frequency histogram of a signal intensity of the millimeter-wave-radar signal within the expanded target detecting block, and drawing a corresponding cumulative distribution function according to the frequency histogram;
then continuing to perform normalization processing to the cumulative distribution function, and calculating an area under curve; and
according to a magnitude of a numerical value of the area under curve, generating the radar target confidence.

9. A vehicle, **characterised in that** the vehicle comprises:
a first image acquiring module configured for acquiring a millimeter-wave-radar image;
a second image acquiring module configured for acquiring a lidar image;
a spatial-calibration module configured for performing spatial calibration to the millimeter-wave radar and the lidar, to acquire a target-calibrated-pose information;
a time-calibration module configured for matching the millimeter-wave-radar image and the lidar image with respect to a timestamp, to complete time calibration between the millimeter-wave radar and the lidar;
a target inferring module configured for constructing a deep neural network for inferring a lidar image, and generating a target inference result of the lidar by using the deep neural network;
a pseudo-marker module configured for, according to the target-calibrated-pose information, projecting the target inference result to a matched millimeter-wave-radar image as a pseudo-marker of the millimeter-wave-radar image;
a confidence generating module configured for, according to a local signal of the millimeter-wave radar in an area where the pseudo-marker is located, generating a radar target confidence; and
a dataset establishing module configured for, according to the radar target confidence and the pseudo-marker, establishing a millimeter-wave-radar dataset.

10. A vehicle, **characterised in that** the vehicle comprises: a processor, a memory and a computer program that is stored in the memory and is executable on the processor, and the computer program, when executed by the processor, implements the steps of the method for establishing a dataset according to any one of claims 1-8.

11. A computer-readable storage medium, **characterised in that** the computer-readable storage medium stores a computer program, and the computer program, when executed by a processor, implements the steps of the method for establishing a dataset according to any one of claims 1-8.
